# EUROPEAN PATENT SPECIFICATION

(11) **EP 2 862 725 B1**
(45) Date of publication and mention of the grant of the patent: **01.05.2019**
(21) Application number: 14180953.3
(22) Date of filing: 14.08.2014
(51) Int. Cl.: B44C 1/17, B32B 7/12, A63B 49/02, B32B 15/08, B32B 15/082, B32B 15/09, B32B 15/092, B32B 15/095, B32B 27/08, B32B 27/30, B32B 27/36, B32B 27/38, B32B 27/40, B32B 3/02, B32B 3/08, B32B 15/085, B32B 3/26, B29C 67/00

(54) **SPORTS EQUIPMENT**
SPORTAUSRÜSTUNG
ÉQUIPEMENT DE SPORT

(30) Priority: 30.08.2013 JP 2013179905
(43) Date of publication of application: 22.04.2015
(73) Proprietor: Globeride, Inc., Tokyo 203-8511 (JP)
(72) Inventor: Nishikawa, Futoshi, Tokyo, 203-8511 (JP)
(74) Representative: Boult Wade Tennant LLP

(56) References cited:
- EP-A2- 1 375 128
- US-A1- 2004 091 722
- US-A1- 2005 052 516
- US-A1- 2007 079 928
- US-A1- 2007 184 207
- US-A1- 2012 196 095
- DATABASE WPI Week 201344 Thomson Scientific, London, GB; AN 2013-L39452 XP002737020, & JP 2013 126399 A (DAIWA SEIKO KK) 27 June 2013 (2013-06-27) & JP 2013 126399 A (GLOBERIDE INC) 27 June 2013 (2013-06-27)

## Description

### TECHNICAL FIELD

The present invention relates to a sports equipment (e.g., fishing gears including fishing poles, golf clubs, and rackets) with a base member having printed thereon characters and/or decorative patterns by ink-jet printing using an ultraviolet (UV) curable resin (e.g., an UV ink), which cures upon irradiation with UV rays. In particular, the present invention relates to sports equipment having, on the surface, a decorative layer achieving three-dimensional and metallic appearance by using UV-curable resin.

### BACKGROUND

Conventionally, it has been widely adopted to ink-jet print decorations and the like on the surface of a base member. Ink for ink-jet printing used for such applications is categorized mainly into aqueous, oil-based, solvent-based and UV-curable ink. Especially, UV-curable ink has been adopted in various fields because its solventless, and quick-drying, and endurable natures enable printing on various materials such as glass, lumber, metal, plastic, and the like (see, e.g., Patent Literature 1 below).

In a decoration using such ink, it has been performed to improve aesthetics and the like by forming three-dimensional and metallic appearance (see, e.g., Patent Literature 2 below). In such a case, for example, metallic ink including metal flake pigment is used with various resins (e.g., adhesive primer and the like) as binders therefor. UV-curable metallic ink including metal flake pigment is also known (see, e.g., Patent Literature 3 below).

### RELEVANT REFERENCES

### LIST OF RELEVANT PATENT LITERATURE

Patent Literature 1: Japanese Patent Application Publication No. 2013-126399
Patent Literature 2: Japanese Patent Application Publication No. 2009-297631
Patent Literature 3: Japanese Patent Application Publication No. 2005-272568
Patent Literature 4: EP 1 375 128 A2 (HERAEUS GMBH, published 2. January 2004) discloses a configuration comprising: perforated Metal / heat-activatable thermoplastic adhesive / perforated Metal / heat-activatable thermoplastic adhesive / perforated Metal The production of a metal-plastic foil composite comprises embedding a metal foil (3) in a layer of plastic adhesive (2) so that the adhesive partially fills the recesses (7) in the metal foil. The surface of the metal foil facing the adhesive remains free from the plastic adhesive.

### SUMMARY

Several issues arise in achieving three-dimensional and metallic appearance by ink-jet printing with UV-curable metallic ink as follows:

UV-curable ink has a property of significant viscosity change according to temperature. When the viscosity is low, ink-jet nozzles suitable for ejecting such UV-curable ink may possibly be clogged with metallic powder having a large grain diameter and dispersedly included in the ink.

In UV-curable metallic ink, it is one of the issues that metal flake pigment promotes initiation of polymerization of monomers or oligomers in UV-curable resin and, as such, short-term gelation occurs when the ink is in storage. Further, metallic shine of ink film of printed material using such ink tends to be lost by oxidization of the metal flake as time advances.

To solve these issues in the case of forming three-dimensional and metallic appearance using UV-curable metallic ink including metal flake pigment, it takes a lot of effort and great cost and it is difficult to sufficiently achieve three-dimensional metallic appearance.

The present invention is intended to overcome the above issues and one of the objects hereof is to provide sports equipment having, on the surface, a decorative layer which is able to sufficiently achieve three-dimensional and metallic appearance at low cost by ink-jet printing with ultraviolet-curable resin.

To the above end, the present invention is sports equipment having a base member and a decorative layer provided on a surface of the base member in a laminated state, wherein the decorative layer comprises a first adhesive layer of ultraviolet-curable resin formed into a first decorative shape by ink-jet printing a first metallic material layer adhered on the first adhesive layer, the first metallic material layer being formed into the first decorative shape a second adhesive layer of ultraviolet-curable resin disposed on the upper side of the first metallic material layer by ink-jet printing, the second adhesive layer being formed into a second decorative shape and a second metallic material layer adhered on the second adhesive layer, the second metallic material layer being formed into the second decorative shape wherein the first metallic material layer is exposed or visible through gaps between each dots of the ultraviolet-curable resin which forms the second adhesive layer.

According to the configurations mentioned above, the decorative layer is formed by layering at least two tuples of an adhesive layer of UV-curable resin provided by ink-jet printing and a metallic material layer adhered onto the adhesive layer. Note that the decorative layer at least has a first tuple which comprises the first adhesive layer and the first metallic material layer and a second tuple which comprises the second adhesive layer and the second metallic material layer, and the number of the layered tuples is not limited. The first metallic material layer is exposed or visible through gaps between each dots of the ultraviolet-curable resin which forms the second adhesive layer. Accordingly, deep, three-dimensional, and metallic appearance can be achieved because at least two metallic material layers at different level can be observed in the same visual field.

According to the configurations mentioned above, an adhesive layer of UV-curable resin ink-jet printed without UV-curable metallic ink and a different layer which is a metallic material layer adhered on the adhesive layer are layered and the lower layer which is the metallic material layer is made visible through the upper layer. Accordingly, deep, three-dimensional, and metallic appearance can be sufficiently achieved at low cost.

In the configurations mentioned above, "decoration" constitutes characters, lines, coloring, patterns (including colored patterns), or the combination hereof. A "decorative layer" includes a plurality of layers stacked together to form the decoration as a whole. In the configurations mentioned above, a "dot" is each of droplets of resin which are ejected from ink-jet nozzles of an ink-jet printer and landed on the metallic material layers.

In the configurations mentioned above, the second decorative shape preferably differs from but may be the same as the first decorative shape, Different decorative shape may be, for example, the same in pattern (including characters) and different in coloring, or the same in coloring and different in pattern. In the configurations mentioned above, a layer is exposed if the layer is completely open without any other layer thereon (naked). A layer is "visible" if the layer is visible through a transparent layer and the like.

In the configurations mentioned above, preferably, the decorative layer further comprises a third adhesive layer of UV-curable resin disposed on the upper side of the second metallic material layer, the third adhesive layer being formed into a third decorative shape by ink-jet printing and a third metallic material layer adhered on the third adhesive layer the third metallic material layer being formed into the third decorative shape wherein the second metallic material layer and/or the first metallic material layer are exposed or visible through gaps between each dots of UV-curable resin which forms the third adhesive layer.

In the configurations mentioned above, at least three metallic material layers at different levels can be observed in the same visual field. Accordingly, deeper and more three-dimensional metallic appearance can be achieved. In the case mentioned above, the third decorative shape preferably differs from but may be the same as the first and/or the second decorative shape. In a part of or whole of the decorative layer, both the second metallic material layer and the first metallic material layer may be exposed or visible through gaps between dots of UV-curable resin which forms the third adhesive layer. Also in a part of or whole of the decorative layer, either only the second metallic material layer or only the first metallic material layer may be exposed or visible through gaps between dots of UV-curable resin which forms the third adhesive layer. By the combination of these, three-dimensionality may be diversified in the same visual field.

In the configurations mentioned above, the layers which constitute the decorative layer may have any desirable thickness. The thicknesses of all the layers may be the same or the thicknesses of a part of or all the layers may be different. All or a part of the extending areas of the layers which constitute the decorative layer may be the same or may be different. The variation in thicknesses or extending areas of layers may contribute to the creation of three-dimensionality by a synergistic effect with the exposure or visibility of metallic materials in different layers described above.

According to the present invention, sports equipment having, on the surface, a decorative layer which is able to sufficiently achieve three-dimensional and metallic appearance at low cost by ink-jet printing with an ultraviolet-curable resin may be provided.

### BRIEF DESCRIPTION OF THE DRAWINGS

Fig. 1 schematically illustrates a lateral view of a pseudo bait for fishing (lure) having a decorative layer on the surface of a base member, which is one example of sports equipment of the present invention.
Fig. 2 schematically illustrates a lateral view of a part of a fishing rod having a decorative layer on the surface of a base member, which is one example of sports equipment of the present invention.
Fig. 3 schematically illustrates a plan view of a tennis racket having a decorative layer on the surface of a base member, which is one example of sports equipment of the present invention.
Fig. 4 schematically illustrates a longitudinal sectional view of the layer structure of the decorative layer according to the first embodiment of the present invention.
Fig. 5 schematically illustrates a longitudinal sectional view of the layer structure of the decorative layer according to the second embodiment of the present invention.
Fig. 6 schematically illustrates a longitudinal sectional view of the layer structure of the decorative layer according to the third embodiment of the present invention.
Fig. 7 schematically illustrates a cross sectional view along the B-B line in Fig. 5.
Fig. 8 schematically illustrates a cross sectional view along the A-A line in Fig. 5.
Fig. 9 schematically illustrates a longitudinal sectional view of the layer structure of the decorative layer according to the fourth embodiment of the present invention.
Fig. 10 schematically illustrates a longitudinal sectional view of the layer structure of the decorative layer according to the fifth embodiment of the present invention.
Fig. 11 schematically illustrates a longitudinal sectional view of the layer structure of the decorative layer according to the sixth embodiment of the present invention.
Fig. 12 schematically illustrates a longitudinal sectional view of the layer structure of the decorative layer according to the seventh embodiment of the present invention.
Fig. 13 schematically illustrates a longitudinal sectional view of the layer structure of the decorative layer according to the eighth embodiment of the present invention.

### DESCRIPTION OF EXAMPLE EMBODIMENTS

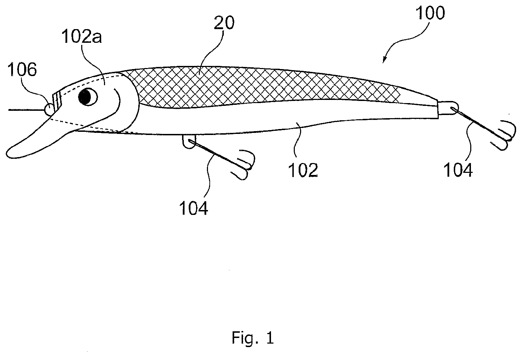

Embodiments of sports equipment according to the invention will be explained by reference to drawings as follows. Figs 1, 2 and 3 show examples of the sports equipment:

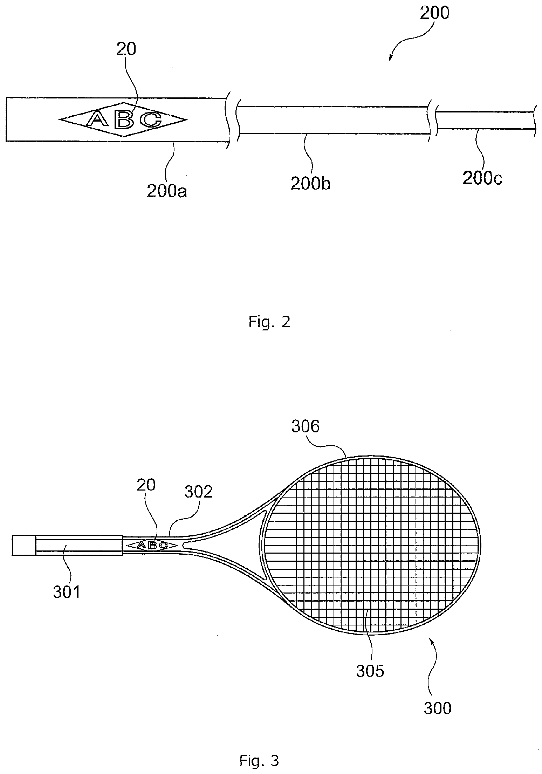

Fig. 1 schematically illustrates a lateral view of a pseudo bait for fishing (lure) having a decorative layer on the surface of a base member. Fig. 2 schematically illustrates a lateral view of a part of a fishing rod for fishing having a decorative layer on the surface of a base member. Fig. 3 schematically illustrates a tennis racket having a decorative layer on the surface of a base member.

A lure 100 shown in Fig. 1 has a lure body 102 imitating a fish, a fishing line connection unit 106 which is provided in a head 102a of the lure body 102, and fishing hooks 104 which depend from an abdomen and a tail part of the lure body 102, wherein a decorative layer 20 decorated with scaled patterns is provided on a back of the lure body 102. Naturally, the decorative layer 20 may be provided on a part other than the back of the lure body 102.

A fishing rod 200 shown in Fig. 2 is, for example, a telescopic one and comprises a base rod 200a, a plurality of rods 200b, 200c,... being capable of telescoping within a base rod 200a. A base rod 200a is, for example, provided with the decorative layer 20 decorated with characters and patterns. Naturally, the decorative layer 20 may be provided on rods which are other than the base rod 200a.

A tennis racket 300 shown in Fig.3 has a shaft 302 provided with a grip 301 having a tape and the like wound therearound and a frame 306 extending from a tip of the shaft 302 and strung with a net (a gut) 305, wherein the shaft 302 is provided with the decorative layer 20 constituted by characters and patterns.

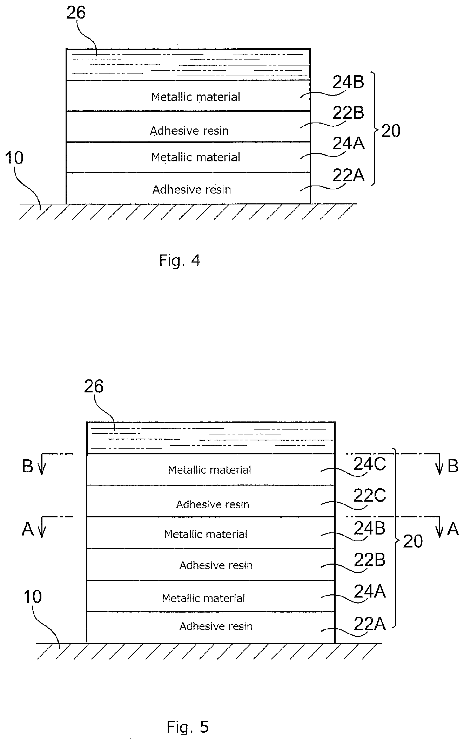

Then, a layer structure of the decorative layer 20 will be described in detail with reference to Figs. 4 to 13. Fig. 4 schematically illustrates a longitudinal sectional view of the layer structure of the decorative layer 20 according to the first embodiment of the present invention. As shown in the figure, the decorative layer 20 of the embodiment is provided on the surface of a base member 10 (e.g., a base member of the lure body 102 of the lure 100 in Fig.1, a base member of the base rod 200a of the fishing rod 200 in Fig.2, a base member of the shaft 302 of the tennis racket 300 and the like) in Fig. 3 in a layered or laminated state.

The decorative layer 20 comprises a first adhesive layer 22A of ultraviolet-curable resin formed into a first decorative shape by ink-jet printing, a first metallic material layer 24A adhered on the first adhesive layer 22A and formed into the first decorative shape, a second adhesive layer 22B of ultraviolet-curable resin disposed directly or across a certain transparent (colored or uncolored) layer on the upper side of the first metallic material layer by ink-jet printing, the second adhesive layer 22B being formed into a second decorative shape and a second metallic material layer 24B adhered on the second adhesive layer 22B, the second metallic material layer being 24B formed into the second decorative shape. The outermost layer 24B of the decorative layer 20 may be coated with uncolored or colored transparent layer 26 in the embodiment. This transparent layer 26 may be formed of a coating material including solvent (solvent ink) or UV-curable ink including UV-curable resin,

In the layer structure, a base member 10 may be formed of any of materials. Synthetic resin, e.g., FRP, PP (PolyPropylene), PET (PolyEthylene Terephthalate), PC (PolyCarbonate), acrylic resin and the like can be adopted as a base member 10. One of the acrylic resins is PMMA (PolyMethyl MethAcrylate resin). Metal, e.g., stainless steels, aluminum, alloys of copper, brasses and the like can be included other than the acrylic resins. Ceramics, glass, wares and the like which are inorganic can be adopted, too.

The adhesive layers 22A, 22B may be an uncolored transparent layer or a colored transparent layer. UV-curable resin comprised by adhesive layers 22A, 22B is resin having adhesiveness of the type of curing by polymerization reaction by irradiation with ultraviolet rays. Specifically, this UV-curable resin may comprise photopolimerizable oligomer and monomer (e.g., epoxy acrylate, urethane acrylate, polyester acrylate and the like) as a principle ingredient(s), pigment and an auxiliary material(s) such as an antifoaming agents and the like as well as a photopolymerization initiator as a catalytic agent. By irradiation with ultraviolet rays, a photopolymerization initiator generates radical, this radical initiates a polimerization of oligomer, and by this polymerization reaction, UV-curable resin cures and is fixed on a print target. As photopolimerization initiators, Benzophenone series, benzoin series, acetophenone series, thioxanthone series, acylphosphineoxide series and the like are generally adopted, although a various types of photopolymerization initiators exist.

As a metallic material which is provided as metallic material layers 24A, 24B,..., for example, gold, silver, copper, platinum, aluminum, tin, brass and like may be included and especially, materials which are photoluminescent are preferable.

In the embodiment, decorative shapes of UV-curable resin which is provided as adhesive layers 22A, 22B are ink-jet printed on a base plate (material) 10 or the first metallic material layer 24A. An ink-jet printer (not shown) performing ink-jet printing has a recording head having a plurality of ejection nozzles and being reciprocal in scanning direction by a carriage and a light source for UV-curing which is equipped in the carriage. The light source is a mean to irradiation with ultraviolet rays and may adopt LED, for example. Adaptation of LED contributes to suppression of heat generation and saving energy. Naturally, metal halide lamp, high pressure mercury lamp and the like as well as LED may be adopted as the light source.

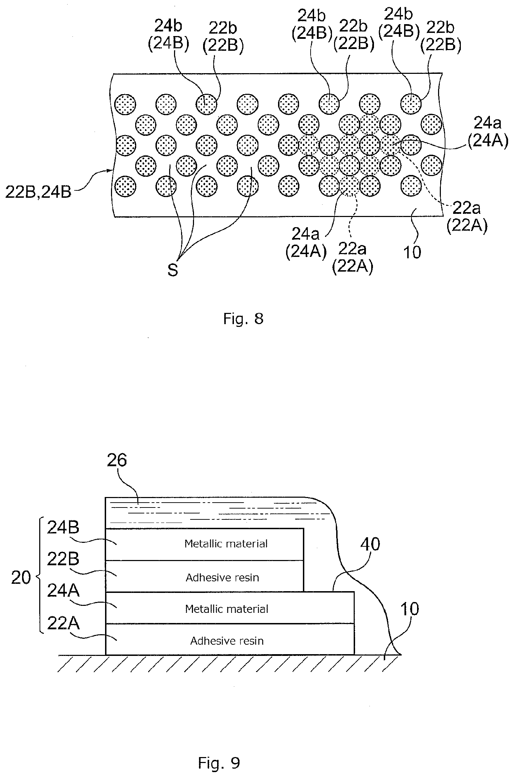

In printings by such a ink-jet printer, as shown in Fig.8, a droplet of UV-curable resin which constitutes the adhesive layer 22A or 22B is landed onto the base member 10 or the first metallic material layer 24A in a punctiform manner from the ejection nozzles of the recording head of the ink-jet printer. In Fig. 8, resin dots 22b of the second adhesive layer 22B of the upper side, are shown by solid lines and resin dots 22a of the first adhesive layer 22A of the lower side, are shown by dashed lines. For convenience sake, resin dots 22a of the first adhesive layer 22A of the lower side are partially shown in Fig. 8.

As methods to dispose metallic material layers 24A, 24B onto the adhesive layers 22A, 22B of UV-curable resin landed in a punctiform manner as mentioned above, a method to adhere metallic materials 24a, 24b in the same punctiform manner upon resin dots 22a, 22b by sticking and pushing a film of metallic foil onto the adhesive layer 22A, 22B, then ripping the film out may be, for example, adopted. By this way, the metallic material layers 24A, 24B are along the decorative figures of adhesive layers 22A, 22B (the decorative figures of a metallic material layers 24A, 24B are consistent with the decorative figures of the adhesive layers 22A, 22B). As another method to dispose the metallic material layers 24A, 24B onto the adhesive layers 22A, 22B, a method to spray metallic flakes onto the adhesive layers 22A, 22B may be, for example, adopted, but the disposition of metal is not limited.

Finally, by the disposition of resin in a punctiform manner and the adhesion of the metallic materials as mentioned above, in the decorative layer 20, as shown in Fig. 8, the first metallic material layer 24A of the lower side (the metallic material 24a of the first metallic material layer 24A which is adhered on resin dots 22a of the first adhesive layer 22A which is shown by the dashed lines) is exposed (as mentioned below, visible in the case that a transparent layer lies between the first metallic material layer 24A and the second adhesive layer 22B) through gaps S between each dots 22b, 22b (shown by the solid lines) of UV-curable resin which forms the second adhesive layer 22B.

As mentioned above, the decorative layer 20 in the embodiment is provided by layering or laminating at least two tuples of the adhesive layer 22A(22B) of UV-curable resin provided by ink-jet printing and the metallic material layer 24A(24B) adhered onto the adhesive layer 22A(22B), wherein the first metallic material layer 24A is exposed or visible through gaps S between each dots 22b, 22b of UV-curable resin which forms the second adhesive layer 22B. Accordingly, the decorative layer 20 may achieve deep and three-dimensional metallic appearance because at least the two metallic material layers 24A, 24B, which are different from each other, may be observed in the same visual field. That is, without using UV-curable metallic ink, the decorative layer 20 mentioned above is provided by layering or laminating the adhesive layers 22A (22B) of ink-jet printed UV-curable resin and the different layers which are the metallic material layers 24A (24B) adhered on the adhesive layers 22A (22B) and by making the lower layer which is the metallic material layer 24A visible from the upper layers. Accordingly deep and three-dimensional metallic appearance may be sufficiently achieved at low cost.

Fig. 5 schematically illustrates a longitudinal sectional view of the layer structure of the decorative layer 20 according to the second embodiment of the present invention. As shown in the figure, the decorative layer 20 in the embodiment has a third adhesive layer 22C of UV-curable resin disposed directly or, in some embodiment, across a certain transparent layer on the upper side of the second metallic material layer 24B of the decorative layer 20 in the first embodiment shown in Fig. 4 and, further, formed into a third decorative shape by ink-jet printing and a third metallic material layer 24C adhered on the third adhesive layer 22C and formed into a third decorative shape, wherein the third metallic material layer 24C is coated with an uncolored or colored transparent layer 26. Additionally, materials which constitute each layers and means of layering or laminating is the same as ones of the first embodiment (in the case of the third embodiment and on, the same as the first embodiment).

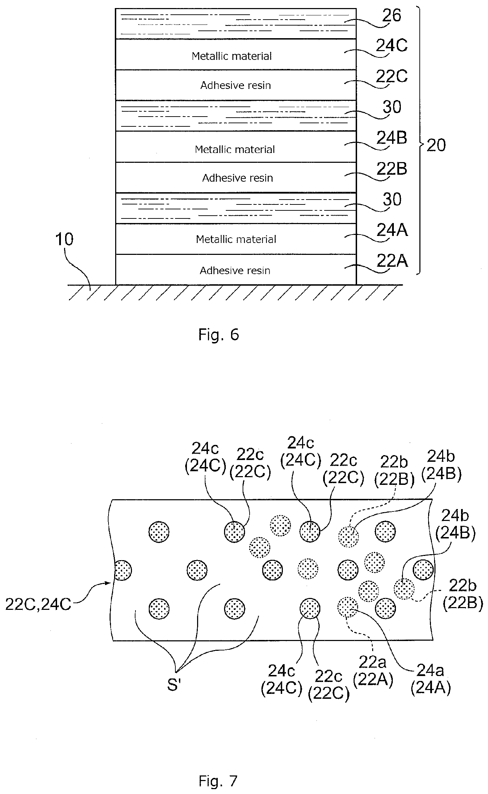

In the embodiment, gaps S', in other words, intervals between each dots 22c, 22c of the UV-curable resin which forms the third adhesive layer 22C is configured to be greater than gaps S, in other words, intervals between each dots 22a, 22a and/or each dots 22b, 22b of UV curable-resin which forms the second adhesive layer 22B and/or the first adhesive layer 22A, as shown by comparing Fig. 8 with Fig. 7. Fig. 8 and 7 are the cross-sectional views along with the A-A line in Fig. 5 and along the B-B line in Fig. 5 each. In Fig. 7, resin dots 22c of the third adhesive layer of the upper side are shown by solid lines as well as resin dots 22a, 22b of the first and second adhesive layers of the lower side is partially shown by dashed lines. Amongst layers 22C, 22B, (22A), such difference of intervals between dots arises, for example, by differing, amongst layers 22C, 22B, (22A), amount of resin ejected on printing (ratio for all the ejection area).

Accordingly, in the decorative layer 20 of the embodiment, through the gaps S' between each dots 22c, 22c of UV-curable resin which forms the third adhesive layer 22C, the second metallic material layer 24B of the lower side (metallic material 24b of the second metallic material layer 24B adhered onto resin dots 22b of the second adhesive layer shown by dashed lines) and/or the first metallic material layer 24A (metallic material 24a of the first metallic material layer 24A adhered onto resin dots 22a of the first adhesive layer 22A shown by dashed lines) are exposed (as mentioned below, visible in the case that a transparent layer(s) lie(s) between the first metallic material layer 24A and the second adhesive layer 22B and/or between the second metallic material layer 24B and the third adhesive layer 22C).

To observe metallic material of lower layer through the gaps between resin dots of upper adhesive layer, intervals between resin dots of an upper adhesive layer may be configured to be greater than one of a lower adhesive layer as the embodiment. A lower metallic material may be also observed through gaps of an adhesive layer by shifting the positions of resin dots of an upper layer from the positions of resin dots of a lower layer or, as mentioned below, by providing an resin opening area (a hole and the like) in an adhesive layer.

Fig. 6 schematically illustrates a longitudinal sectional view of the layer structure of the decorative layer 20 according to the third embodiment of the present invention. As shown in the figure, the decorative layer (20) of the embodiment is one of the variations of the decorative layer 20 of the second embodiment shown in Fig. 5. In addition to the layer structure of the decorative layer 20 of the second embodiment, a colored or uncolored transparent layer 30 lies between the first metallic material layer 24A and the second adhesive layer 22B and a colored or uncolored transparent layer 30 lies between the second metallic material layer 24B and the third adhesive layer 22C. The lying transparent layer 30 may be a coating material comprising solvent. To avoid position shifts by flow of a solvent, UV-curable ink and the like comprising UV-curable resin may be preferable. Other configurations are the same as the decorative layer 20 of the second embodiment shown in Fig 5.

Fig. 9 schematically illustrates a longitudinal sectional view of the layer structure of the decorative layer 20 according to the fourth embodiment of the present invention. In each embodiments described above, the second adhesive layer 22A may be disposed all over upon the first metallic material layer 24A. In the decorative layer 20 of the embodiment, however, the second adhesive layer 22B, (accordingly the second metallic material layer, too), is disposed all over upon a partial upper side of the first metallic material layer 24A. Then, a stage 40 is formed between the second adhesive layer 22B and the first metallic material layer 24A. The transparent layer (colored or uncolored) 26 with which the second metallic material layer 24B is coated covers not only the second metallic material layer 24B but also all over the decorative layer 20. Other configurations are the same as the decorative layer 20 of the first embodiment shown in Fig 4.

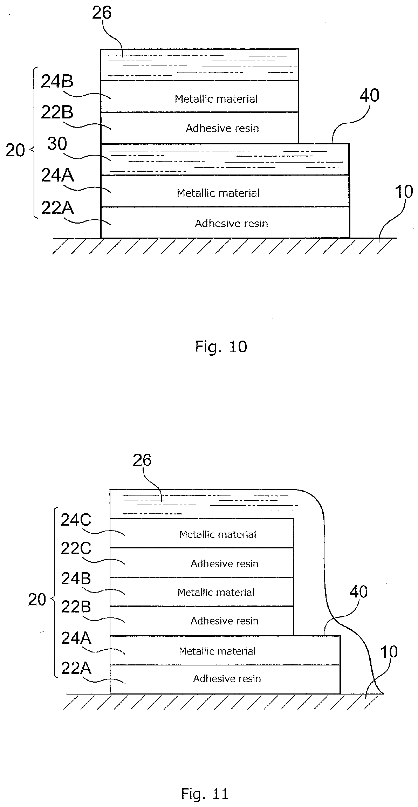

Fig. 10 schematically illustrates a longitudinal sectional view of the layer structure of the decorative layer 20 according to the fifth embodiment of the present invention. As shown in the figure, the decorative layer 20 of the embodiment is one of the variations of the decorative layer 20 of the first embodiment shown in Fig. 4. The second adhesive layer 22B, (accordingly the second metallic material layer, too), is disposed all over upon not a whole but a partial upper side of the first metallic material layer 24A. Then, a stage 40 is formed between the second adhesive layer 22B and the first metallic material layer 24A. The colored or uncolored transparent layer 30 lies between the first metallic material layer 24A and the second adhesive layer 22B. Other configurations are the same as the decorative layer 20 of the first embodiment shown in Fig 4.

Fig. 11 schematically illustrates a longitudinal sectional view of the layer structure of the decorative layer 20 according to the sixth embodiment of the present invention. As shown in the figure, the decorative layer 20 of the embodiment is one of the variations of the decorative layer 20 of the second embodiment shown in Fig. 5. The second adhesive layer 22B (accordingly, the second metallic material layer 24B, the third adhesive layer 22C and the third metallic material layer 24C, too) is disposed all over upon not a whole but a partial upper side of the first metallic material layer 24A. Then, a stage 40 is formed between the second adhesive layer 22B and the first metallic material layer 24A. The transparent layer 26 with which the third metallic material layer 24C is coated covers not only the third metallic material layer 24C but also whole decorative layer 20. Other configurations are the same as the decorative layer 20 of the second embodiment shown in Fig 5.

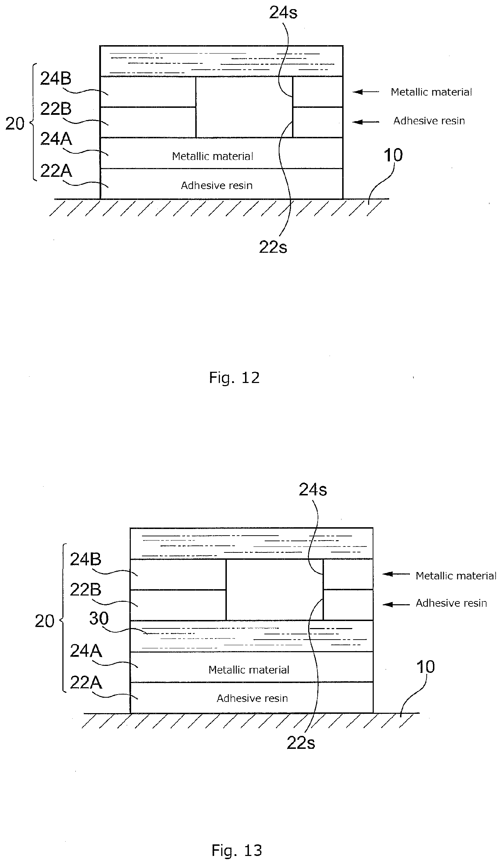

Fig. 12 schematically illustrates a longitudinal sectional view of the layer structure of the decorative layer 20 according to the seventh embodiment of the present invention. As shown in the figure, the decorative layer 20 of this embodiment is one of the variations of the decorative layer 20 of the first embodiment shown in Fig. 4. The second adhesive layer 22B has an opening area 22s, e.g., a hole or cutout, as part of its resin. Accordingly, the second metallic material layer 24B also has an opening area 24s which corresponds to the opening area 22s, and which has no metallic material. The first metallic material layer 24A is exposed through the opening area 22s (visible through the transparent layer 26). In this case, the opening area 22s may form a certain decorative shape. Other configurations are the same as the decorative layer 20 of the first embodiment shown in Fig 4.

Fig. 13 schematically illustrates a longitudinal sectional view of the layer structure of the decorative layer 20 according to the eighth embodiment of the present invention. As shown in the figure, the decorative layer 20 of the embodiment is one of the variations of the decorative layer 20 of the seventh embodiment shown in Fig. 12. The (colored or uncolored) transparent layer 30 lies between the first metallic material layer 24A and the second adhesive layer 22B. Other configurations are the same as the decorative layer 20 of the eighth embodiment shown in Fig 13.

Embodiments of the present invention are not limited to the above descriptions and are susceptible to various modifications within the purport of the present invention. For example, the number of layers in the decorative layers 20 described above may differ among the embodiments or may be the same among the embodiments. The decorative layer 20 may be provided all over or partly on the base member 10. The opening area described above may be provided with the third adhesive layer together with or as well as the second adhesive layer. In this case, the opening area itself may form a decorative shape. The third adhesive layer may be provided all over on a part of upper side of the second metallic material layer.

### LIST OF REFERENCE NUMBERS

- 10: base member
- 20: decorative layer
- 22a, 22b, 22c: resin dots
- 22s: opening area
- 22A: first adhesive layer
- 22B: second adhesive layer
- 22C: third adhesive layer
- 24A: first metallic material layer
- 24B: second metallic material layer
- 24C: third metallic material layer
- 26: transparent layer
- 30: transparent layer
- 100: lure (sport equipment)
- 200: fishing rod (sports equipment)
- 300: tennis racket (sports equipment)

## Claims

1. Sports equipment having a base member and a decorative layer provided on a surface of the base member in a laminated state,
wherein the decorative layer comprises:
a first adhesive layer of ultraviolet-curable resin formed into a first decorative shape by ink-jet printing;
a first metallic material layer adhered on the first adhesive layer, the first metallic material layer being formed into the first decorative shape;
a second adhesive layer of ultraviolet-curable resin disposed on the upper side of the first metallic material layer by ink-jet printing, the second adhesive layer being formed into a second decorative shape and;
a second metallic material layer adhered on the second adhesive layer, the second metallic material layer being formed into the second decorative shape;
wherein the first metallic material layer is exposed or visible through gaps between each dots of the ultraviolet-curable resin which forms the second adhesive layer.

2. The sports equipment of claim 1, wherein a transparent layer lies between the first metallic material layer and the second adhesive layer.

3. The sports equipment of any one of claims 1 and 2, wherein the second adhesive layer partially has an opening area, and wherein the first metallic material layer is exposed or visible through the opening area.

4. The sports equipment of claim 3, wherein the opening area forms a decorative shape.

5. The sports equipment of any one of claims 1 to 4, wherein the second adhesive layer is provided all over on the partial upper side of the first metallic material layer.

6. The sports equipment of any one of claims 1 to 5, wherein the decorative layer further comprises:
a third adhesive layer of UV-curable resin disposed on the upper side of the second metallic material layer, the third adhesive layer being formed into a third decorative shape by ink-jet printing; and
a third metallic material layer adhered on the third adhesive layer, the third metallic material layer being formed into the third decorative shape;
wherein the second metallic material layer and/or the first metallic material layer are exposed or visible through gaps between each dots of UV-curable resin which forms the third adhesive layer.

7. The sports equipment of claim 6, wherein a transparent layer lies between the second metallic material layer and the third adhesive layer.

8. The sports equipment of any one of claims 6 and 7, wherein interval between each dots of UV-curable resin which forms the third adhesive layer is greater than interval between each dots of UV-curable resin which forms the second adhesive layer and/or the first adhesive layer.

9. The sports equipment of any one of claims 1 to 8, wherein an outermost layer of the decorative layer is coated with a transparent layer.

## Patentansprüche

1. Sportequipment, welches ein Basiselement und eine dekorative Schicht aufweist, welche an einer Fläche des Basiselements in einem lamintierten Zustand bereitgestellt ist,
wobei die dekorative Schicht umfasst:
eine erste adhäsive Schicht eines Ultraviolett-härtbaren Harzes, welche durch Tintenstrahldrucken in eine erste dekorative Form gebildet ist;
eine erste metallische Materialschicht, welche an der ersten adhäsiven Schicht angebracht ist, wobei die erste metallische Materialschicht in die erste dekorative Form gebildet ist;
eine zweite adhäsive Schicht eines Ultraviolett-härtbaren Harzes, welche an der oberen Seite der ersten metallischen Materialschicht durch Tintenstrahldrucken angeordnet ist, wobei die zweite adhäsive Schicht in eine zweite dekorative Form gebildet ist; und
eine zweite metallische Materialschicht, welche an der zweiten adhäsiven Schicht angebracht ist, wobei die zweite metallische Materialschicht in die zweite dekorative Form gebildet ist;
wobei die erste metallische Materialschicht durch Spalte zwischen jeden Punkten des Ultraviolett-härtbaren Harzes freigelegt oder sichtbar ist, welches die zweite adhäsive Schicht bildet.

2. Sportequipment nach Anspruch 1, wobei eine transparente Schicht zwischen der ersten metallischen Materialschicht und der zweiten adhäsiven Schicht liegt.

3. Sportequipment nach einem der Ansprüche 1 und 2, wobei die zweite adhäsive Schicht teilweise einen Öffnungsbereich aufweist, und wobei die erste metallische Materialschicht durch den Öffnungsbereich freigelegt oder sichtbar ist.

4. Sportequipment nach Anspruch 3, wobei der Öffnungsbereich eine dekorative Form bildet.

5. Sportequipment nach einem der Ansprüche 1 bis 4, wobei die zweite adhäsive Schicht an der teilweisen oberen Seite der ersten metallischen Materialschicht vollständig bereitgestellt ist.

6. Sportequipment nach einem der Ansprüche 1 bis 5, wobei die dekorative Schicht ferner umfasst:
eine dritte adhäsive Schicht eines Ultraviolett-härtbaren Harzes, welche an der oberen Seite der zweiten metallischen Materialschicht angeordnet ist, wobei die dritte adhäsive Schicht in eine dritte dekorative Form durch Tintenstrahldrucken gebildet ist; und
eine dritte metallische Materialschicht, welche an der dritten adhäsiven Schicht angebracht ist, wobei die dritte metallische Materialschicht in die dritte dekorative Form gebildet ist;
wobei die zweite metallische Materialschicht und/oder die erste metallische Materialschicht durch Spalte zwischen jeden Punkten des Ultraviolett-härtbaren Harzes freigelegt oder sichtbar ist, welche die dritte adhäsive Schicht bildet.

7. Sportequipment nach Anspruch 6, wobei eine transparente Schicht zwischen der zweiten metallischen Materialschicht und der dritten adhäsiven Schicht liegt.

8. Sportequipment nach einem der Ansprüche 6 und 7, wobei ein Intervall zwischen jeden Punkten des Ultraviolett-härtbaren Harzes, welches die dritte adhäsive Schicht bildet, größer ist als ein Intervall zwischen jeden Punkten des Ultraviolett-härtbaren Harzes, welches die zweite adhäsive Schicht und/oder die erste adhäsive Schicht bildet.

9. Sportequipment nach einem der Ansprüche 1 bis 8, wobei eine äußerste Schicht der dekorativen Schicht mit einer transparenten Schicht beschichtet ist.

## Revendications

1. Équipement sportif ayant un élément de base et une couche décorative prévue sur une surface de l'élément de base dans un état stratifié,
dans lequel la couche décorative comprend :
une première couche adhésive de résine durcissable aux ultraviolets formée dans une première forme décorative par impression à jet d'encre ;
une première couche de matériau métallique collée sur la première couche adhésive, la première couche de matériau métallique étant formée dans la première forme décorative ;
une deuxième couche adhésive de résine durcissable aux ultraviolets disposée sur le côté supérieur de la première couche de matériau métallique par impression à jet d'encre, la deuxième couche adhésive étant formée dans une deuxième forme décorative et ;
une deuxième couche de matériau métallique collée sur la deuxième couche adhésive, la deuxième couche de matériau métallique étant formée dans la deuxième forme décorative ;
dans lequel la première couche de matériau métallique est exposée ou visible à travers des espaces entre chacun des points de la résine durcissable aux ultraviolets qui forme la deuxième couche adhésive.

2. Équipement sportif de la revendication 1, dans lequel une couche transparente se situe entre la première couche de matériau métallique et la deuxième couche adhésive.

3. Équipement sportif de l'une quelconque des revendications 1 et 2, dans lequel la deuxième couche adhésive a partiellement une zone d'ouverture, et où la première couche de matériau métallique est exposée ou visible à travers la zone d'ouverture.

4. Équipement sportif de la revendication 3, dans lequel la zone d'ouverture forme une forme décorative.

5. Équipement sportif de l'une quelconque des revendications 1 à 4, dans lequel la deuxième couche adhésive est prévue sur tout le côté supérieur partiel de la première couche de matériau métallique.

6. Équipement sportif de l'une quelconque des revendications 1 à 5, dans lequel la couche décorative comprend en outre :
une troisième couche adhésive de résine durcissable aux UV disposée sur le côté supérieur de la deuxième couche de matériau métallique, la troisième couche adhésive étant formée dans une troisième forme décorative par impression à jet d'encre ; et
une troisième couche de matériau métallique collée sur la troisième couche adhésive, la troisième couche de matériau métallique étant formée dans la troisième forme décorative ;
dans lequel la deuxième couche de matériau métallique et/ou la première couche de matériau métallique est/sont exposée(s) ou visible(s) à travers des espaces entre chacun des points de résine durcissable aux UV qui forme la troisième couche adhésive.

7. Équipement sportif de la revendication 6, dans lequel une couche transparente se situe entre la deuxième couche de matériau métallique et la troisième couche adhésive.

8. Équipement sportif de l'une quelconque des revendications 6 et 7, dans lequel l'intervalle entre chacun des points de résine durcissable aux UV qui forme la troisième couche adhésive est supérieur à l'intervalle entre chacun des points de résine durcissable aux UV qui forme la deuxième couche adhésive et/ou la première couche adhésive.

9. Équipement sportif de l'une quelconque des revendications 1 à 8, dans lequel la couche la plus à l'extérieur de la couche décorative est revêtue d'une couche transparente.
